# EUROPEAN PATENT APPLICATION

(11) **EP 4 676 097 A1**
(43) Date of publication of application: **07.01.2026**
(21) Application number: 24306136.3
(22) Date of filing: 05.07.2024
(51) Int. Cl.: H04W 4/02, H04W 4/70, H04L 5/00, H04W 72/00

(54) **COEXISTENCE OF TWO UWB SYSTEMS RELYING ON DISTINCT PROTOCOLS, METHODS AND DEVICES**

(71) Applicant: STMicroelectronics International N.V., 1228 Plan-les-Ouates, Geneva (CH); TRUMPF Tracking Technologies GmbH, 71254 Ditzingen (DE)
(72) Inventor: AL-KADI, Ghiath, 8045 Graz (AT); ANDRE, Jean-Marie, 73100 Aix-Les-Bains (FR); WAHL, Eberhard, 73235 Weilheim an der Teck (DE); LEHMANN, Franz, 01219 Dresden (DE); SCHUMACHER, Andreas, 70191 Stuttgart (DE); GÖTZE, Christoph, 01156 Dreseden (DE)
(74) Representative: Casalonga

(57) **Abstract**

To provide coexistence between a FiRa system and an Omlox system, a FiRa device obtains scheduling information from an Omlox satellite, which information defines transmission slots reserved for the FiRa system. The slots may be allocated upon GTS request by the FiRa device over the OoB. The FiRa device configures its FiRa IB unit to receive and decode the Omlox synchronization frames, i.e., RCMs. It counts the slots from the RCMs to locate in time the transmission slots reserved for the FiRa system. Upon reaching those reserved slots, the FiRa device starts managing FiRa communications within the slots. The FiRa device, as FiRa Controller, may send a Control Message to prepare a ranging exchange.

## Description

### TECHNICAL DOMAIN

The present disclosure relates generally to wireless network communications and, more specifically, to coexistence of protocols sharing the same frequency band such as the Ultra-WideBand (UWB).

### BACKGROUND

Ultra-Wide Band (UWB) is a wireless technology recently added to mobile devices that enables not only data-sharing applications, but also many other use cases such as indoor positioning and navigation.

UWB data transmission uses very short radio frequency pulses (often less than a nanosecond) with low energy, over a large bandwidth of 500 MHz or more. UWB communications operate at frequencies between 3.1GHz and 10.6GHz, for example in a first band between 3.1GHz and 4.8GHz or a second band between 6GHz and 8.5GHz.

With the booming adoption of UWB radios, several categories of application have emerged, each of them having specific requirements depending on whether they focus on safety (e.g., access control), deviceto-device exchanges (e.g., direction finding), location tracking (e.g. asset management). Those specific requirements gave rise to multiple standards, hence protocols, relying on UWB.

As an example, FiRa (RTM) and Omlox (RTM) are two UWB-based protocols based on separate specifications. The Car Connectivity Consortium (CCC - RTM) is also preparing and issuing its own specifications.

FiRA targets consumer applications with peer-to-peer ranging where a connection between two devices, including at least one mobile device, is set to allow them to compute the distance between them and possibly the direction. Omlox targets industrial applications where the ranging of mobile devices (or tags) is based on a set of timesynchronized infrastructure devices (or satellites or anchors or beacons) fixed on the ceiling.

For the time being, devices (or "stations") using one UWB-based protocol cannot cooperate with stations using another UWB-based protocol to share the common frequency band in a clever way.

Other protocols also share the same frequency band. For example, the IEEE 802.11 family of standards (or Wifi protocols - RTM) extends the operating band of the devices to the 6 GHz band for bandwidth-intensive applications.

More generally, multiple protocols operating on the same frequency band give rise to risks of interference between the devices operating the multiple protocols.

### SUMMARY

A need thus exists to improve coexistence between devices using the same wireless medium with different protocols. This would provide a global mode of interoperability.

Having noticed that some interfering protocols such as the Omlox protocol are fixed-interval protocols due to tight synchronization issues, it is proposed to rely on synchronization frames of this protocol for a device of the other coexisting protocol to accurately locate in time appropriate transmission slots.

In this context, aspects of the disclosure regard a communication method comprising, at a (e.g. FiRa) first-protocol device of a first-protocol system operating on a wireless medium using a first (e.g. FiRa) protocol:
obtaining (e.g. Omlox) scheduling information from a (e.g. Omlox) second-protocol device of a second-protocol system operating on the wireless medium using a second and different (e.g. Omlox) protocol and fixed transmission slots in a frame structure synchronized with second-protocol synchronization frames, wherein the scheduling information defines transmission slots reserved to the first-protocol device,
configuring the first-protocol device to receive and decode the second-protocol synchronization frames,
managing first-protocol communications in the first-protocol system within the reserved transmission slots, using the second-protocol synchronization frames to locate in time the reserved transmission slots.

The configuration means the first-protocol device can handle any first-protocol frame (signaling) and additionally can decode the specific second-protocol synchronization frames.

The additionally capability of the first-protocol device to decode the second-protocol synchronization frames advantageously allows the first-protocol device to precisely identify the transmission intervals in order to place first-protocol transmissions. This happens without interference with the second-protocol system as the latter granted the transmission intervals. In other words, this configuration allows the first-protocol device to shape its band (first-protocol) communication timeline for coexistence with the second-protocol system.

Furthermore, by relying on the second-protocol synchronization frames, the two coexisting systems remain tightly aligned in time (hence synchronized), avoiding drift and undesired interferences.

Coexistence between multiple different-protocol systems operating on the same frequency band is therefore enhanced.

In some embodiments, the wireless medium is an Ultra-Wide Band medium.

In particular, the first-protocol device may be a FiRa controller, i.e., operating with the FiRa protocol.

Also, the second-protocol device may be an Omlox satellite (or anchor or beacon), i.e., operating with the Omlox protocol.

Due to similar applications in the field of real-time location systems (RTLS), the FiRa and Omlox protocols are more frequently operated in the same area, resulting in high risks of interference should no coexistence method be implemented. The FiRa ranging timeline of the FiRa system can therefore be shaped for coexistence with the Omlox system.

In some embodiments, the transmission slots reserved to the first-protocol device are included in a contention access period of the frame structure (e.g. the RSP LTW window of an Omlox system). This allows any scheduled period (e.g. RSP GTSW window of the Omlox system) to be fully dedicated to the second-protocol devices only.

In some embodiments, obtaining the scheduling information includes out-of-band (OoB) exchanging with the second-protocol device. This takes advantage of those protocols having IB (in-band) and OoB protocols to reduce waste of the IB (e.g. UWB channel).

In some embodiments, obtaining the scheduling information includes requesting a Guaranteed Time Slot (GTS) allocation to the second-protocol device. This applies with the Omlox protocol and any other protocol liable to allocate or schedule transmissions resources.

In specific embodiments, requesting a Guaranteed Time Slot (GTS) allocation includes sending a message having a XGTSReq information element (IE), the XGTSReq IE including a Ranging Type field set to 2. This allows the second-protocol device in an Omlox system to know that the requesting first-protocol device belongs to a non-Omlox system. An appropriate allocation of slots can then be performed by the Omlox system, such as providing slots in the RSP LTW only.

In some embodiments, out-of-band (OoB) exchanging includes performing discovery of the second-protocol device and joining the second-protocol system, using the Bluetooth Low Energy protocol.

In variants, out-of-band (OoB) exchanging includes discovery of the second-protocol device and joining the second-protocol system, using the IEEE 802.15.4 protocol.

In some embodiments, the first-protocol device and the second-protocol device belongs to one and the same dual apparatus, wherein the obtaining of the scheduling information includes information transmission using internal buses within the dual apparatus. The two devices are therefore within the same physical unit or common housing.

Aspects of the disclosure also regard a communication apparatus comprising:
a (FiRa) first-protocol device of a first-protocol system operating on a wireless medium using a first (FiRa) protocol:
a scheduling information unit to obtain (Omlox) scheduling information from a (Omlox) second-protocol device of a second-protocol system operating on the wireless medium using a second and different (Omlox) protocol and fixed transmission slots in a frame structure synchronized with second-protocol synchronization frames, wherein the scheduling information defines transmission slots reserved to the first-protocol device,
a configuring unit to configure the (FiRa) first-protocol device to receive and decode the (Omlox) second-protocol synchronization frames,
wherein the first-protocol device is configured to manage first-protocol communications in the first-protocol system within the reserved transmission slots, using the second-protocol synchronization frames to locate in time the reserved transmission slots.

The apparatus has the same advantages as the method described above.

In some embodiments, the first-protocol device is a FiRa controller and the second-protocol device is an Omlox satellite.

In embodiments, the scheduling information unit is configured to obtain the scheduling information using out-of-band (OoB) communication with the second-protocol device. In particular, the scheduling information unit may be configured to request a Guaranteed Time Slot (GTS) allocation to the second-protocol device, by sending a message having a XGTSReq information element (IE), the XGTSReq IE including a Ranging Type field set to 2.

In some embodiments, the communication apparatus comprises an out-of-band (OoB) unit to perform discovery and joining the second-protocol system, using the Bluetooth Low Energy protocol or the IEEE 802.15.4 protocol.

In some embodiments, the communication apparatus includes the second-protocol device.

A system according to the disclosure may comprise the first-protocol system and the second-protocol system. Such system therefore includes a communication apparatus as above, i.e., compliant with the first protocol, and the second-protocol device as a separate apparatus.

### BRIEF DESCRIPTION OF THE DRAWINGS

Other advantages and characteristics of the invention will become apparent from the detailed description of the non-limiting embodiment and implementations and from the appended drawings in which :
[Fig. 1];
[Fig. 2];
[Fig. 3];
[Fig. 4];
[Fig. 5]; and
[Fig. 6] schematically illustrate embodiments and implementations of the invention.

### DETAILED DESCRIPTION

Multiple radio access technologies share the same wireless medium but raise coexistence issues. A first system comprises a first-protocol device operating on a wireless medium using a first protocol. A second system comprises a second-protocol device operating on the wireless medium using a second and different protocol. The system activities interfere on the same medium.

Known frequency bands facing these issues belong to the Ultra-Wide Band (UWB) considered to range from 3.1GHz to 10.6GHz.

The present disclosure takes the UWB as an example for the proposed coexistence scheme. However, the teachings of the disclosure can apply to other frequency bands shared through multiple radio access technologies.

Various details of exemplary UWB communication protocols are disclosed in the IEEE 802.15.4 and 802.15.4z standards. Declinations of the UWB communications protocols for various ranging services include the UWB FiRa or FiRa (RTM, standing for "fine ranging") protocol and the UWB Omlox or Omlox (RTM) protocol and the Car Connectivity Consortium (CCC) protocols. Details on the FiRa protocol at MAC level are provided by the following specification: "FIRA MEDIUM ACCESS CONTROL (MAC) TECHNICAL SPECIFICATION", VERSION 2.0.0 (below "FiRa document").

Other communication protocols that may use the UWB frequency include the IEEE 802.11ax (and subsequent) standard.

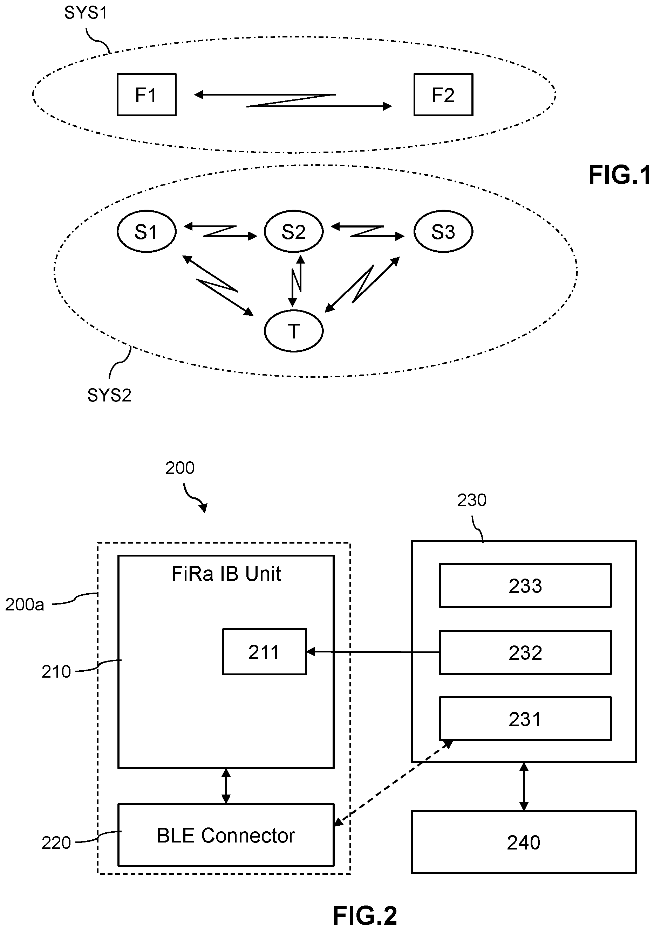

As shown in **Figure 1****,** the description below focuses on the coexistence of a FiRa system SYS1 with an Omlox system SYS2, albeit the same considerations can apply to another other communication systems that share the same radio band and interfere.

Therefore, any first-protocol device may be a FiRa device, while any second-protocol device may be an Omlox device.

FiRa system SYS1 and Omlox system SYS2 use different protocols, which are referred to as FiRa protocol and Omlox protocol for ease of explanation.

System SYS1 is a Two-Way Ranging system, here a FiRa system, in which a first FiRa device F1, known as Controller, defines and controls the ranging features by sending Control Message, and a second FiRa device F2, known as Controlee, utilizes the ranging features as configured via Control Message from the Controller in a One-To-One mode. A higher number of Controlees may be present in a One-To-Many mode of ranging method.

The FiRa devices are UWB-capable devices operating on a UWB channel, which is known as the In-Band (IB). FiRa devices are equipped with Out-of-Band (OoB) Connector which operates on another channel, usually from a lower frequency band. For example, OoB may involve the Bluetooth Low Energy (BLE) standard as described in the technical specification "FIRA CONSORTIUM BLUETOOTH LOW ENERGY OUT-OF-BAND CHANNEL TECHNICAL SPECIFICATION", VERSION 1.0.0. This connector supports the Low Energy Core Configuration as per Bluetooth Core Specification 4.2, Vol 0, Part B, Section 4.4.

The FiRa protocol therefore includes a FiRa IB protocol and a FiRa OoB protocol.

The OoB connector is mainly used for the FiRa devices to discover each other. A description of the Bluetooth Device discovery service, hence of the FiRa OoB protocol, is provided in the above technical specification.

Once two FiRa Devices have discovered the presence of the other (compatible device) and connect to each other, they can perform ranging operations between them, over the IB channel using the FiRa IB protocol. The two FiRa Devices constitutes an UWB network / system.

One of the FiRa device is an Initiator that initiates a ranging exchange by sending the first Ranging Frame (RFRAME), the ranging initiation message. The other FiRa device is a Responder that responds to the ranging initiation message received from the Initiator.

However, a Control Message is transmitted beforehand by a FiRa device, known as Controller.

The Control Message followed by one or more ranging messages are organized in phases within a so-called Ranging Round (RR). Control Message (CM) is a message transmitted by the Controller in a Ranging Control Phase (RCP) corresponding to Slot zero of the Ranging round, starting the latter. Following phases in the Ranging round include the ranging exchange as follows: Ranging Initiation Phase (RIP) in which the Initiator sends a Ranging Initiation Message (RIM) to the Responder(s), such as the RFRAME; Ranging Response Phase (RRP) in which the Responder(s) sends a Ranging Response Message (RRM) to the Initiator; Ranging Final Phase (RFP) in which the Initiator sends a Ranging Final Message (RFM) to the Responder(s) in case of Double-Sided Two-Way Ranging (DS-TWR); and Measurement Report Phase (MRP) in which the participating FiRa Device(s) exchange ranging information and related service information. The ranging measurements are made based on the time of flight of the messages exchanged. More details on these phases and messages and ranging methods are available in the FiRa document.

System SYS2 is a fixed-interval wireless network, here an Omlox system relying on a fixed infrastructure of synchronized satellites S1-S3 (also known as anchors or beacons) and one or more "tags" T.

In-Band (IB) activity refers to radio exchanges over the wireless channel (here UWB) for network organization, synchronization, and location computation. IB operates for example on any channel of the UWB bands. Out of-Band (OoB) activity refers to other radio communication mechanisms over another channel, usually from a lower frequency band (compared to UWB).

The Omlox protocol therefore includes an Omlox IB protocol and an Omlox OoB protocol.

OoB is for instance used for discovery and device management such as device joining and GTS (standing for Guaranteed Time Slot) allocation. For example, OoB may involve the Bluetooth Low Energy (BLE) standard or the IEEE 802.15.4 standard at 2.4GHz.

Satellites S1-S3 are UWB-capable devices used as fixed reference for positioning computation or for the management of a Real Time Location System (RTLS) infrastructure. The infrastructure of synchronized satellites constitutes an UWB network. A satellite propagates the network synchronization and organization (TDMA) over the IB through a Ranging Control Message (RCM) - the satellite is said to be a controller -, and participates in the Initiation phase and collects Propagation Time measurements from all other satellites with a view of performing ranging computations.

Tag T is a UWB-capable device whose location in the network changes during use, hence it is a mobile device. It can be a stand-alone device (e.g., a badge or key fob) that is typically attached to an object of interest, or be integrated into another device or be based on existing UWB-capable devices (e.g., a smartphone). The infrastructure together with the tag (or tags) form the UWB system.

A device performs the Omlox discovery procedure on the OoB to detect the presence of one or more Omlox networks via a passive scanning mechanism, as follows. The device (e.g. tag T) detects presence of Omlox networks by sensing an OoB discovery message (XODM) periodically sent by the controllers on alternating discovery channels (11 and 26). The device selects the desired Omlox network, and retrieves the basic configuration from the selected network, basically from the XODM. Indeed, the latter includes (in a so-called XODM information element - IE) information such as a Tx Power value for OoB transmission, a Ranging Block (RB) configuration specifying the slot organization of ranging rounds within each ranging, an OoB data channel for OoB transmission (except for the XODM message) and an UWB configuration about the used UWB ranging channel. The slot organization is a combination of GTSW and LTW windows as described below

Once the Omlox network is chosen, the device joins the network and authenticates itself to any controller/satellite, after which it can participate in the Omlox network, hence participate to ranging procedures in the IB. Although the join procedure may be performed in the IB, the OoB is preferred. The join procedure includes choosing a parent controller from which RCMs on the IB or the equivalent control messages XOCM (OoB Control Message) on the OoB are received; waiting for an OoB Contention Access Period (CAP); sending a Join Request (known as XJR); waiting for a Join Confirmation (XJC) from the parent controller, which if successful means that the device is accepted in the network and can participate in further actions.

Communications in the Omlox system SYS2 are time-structured in synchronized frame structures, known as ranging blocks, each made of eight (any other number can be used) ranging rounds, each composed of slots. A slot is defined as a number of Ranging Scheduling Time Units in which an Omlox device (satellite or tag) can transmit a message for ranging purposes. A ranging round may be about 125 ms.

Multiple ranging operations can be made within a ranging round, initiated by the controller devices which each sends a Ranging Control Messages RCM during the start portion of the ranging round, known as the extended Ranging Control Phase xRCP. The RCM signals the beginning of the ranging round to controlee devices and also helps the devices to keep synchronization.

Multiple controllers (e.g. satellites S1-S3) may send multiple RCMs in successive slots in the xRCP. Each controller sends an RCM in its dedicated slot after reaching a synchronized state. An RCM is sent at each new ranging round. The RCM is used to convey important information for the real time behavior (e.g. synchronization) of the Omlox system SYS2.

A Ranging Phase RP follows the xRCP in the ranging round.

The RR is subdivided into an Initiation sub-Phase (INIT) and a Response sub-phase (RSP), which can be implemented in different ways: either as a Guaranteed Time Slot Window (GTSW) or as a Large Time Window (LTW), depending on the purpose of the ranging round.

A GTSW Ranging Round uses a many-to-many ranging procedure, in which the RCMs sent by the controllers at the xRCP carry Ranging Round (RR) IE so that all the devices can keep track of the synchronization and scheduling of the slots in which they can transmit. In particular, the RR IE carries the Ranging Block Index and the Ranging Round Index, identifying which Ranging Round is beginning.

To obtain slots in the RSP GTSW, the devices have to request allocation of slots. The allocation procedure processes as follow.

The device sends a Guaranteed Time Slot (GTS) request, i.e., message with a XGTSReq IE. The message is preferably sent in the OoB CAP or, in variant, in the RSP LTW of the IB. The XGTSReq IE includes a LOCRATE field specifying the desired rate of rangings per second as calculated as follows: Rangings per second = 2 ^ (LOCRATE - 9). The valid range of LOCRATE is [3...13]. Of course, the LOCRATE field may be used in variants to indicate a number of slots.

The parent controller chooses which ranging slot(s), in which ranging round(s) in which ranging block(s) become reserved as allocation offer to the requesting device. The parent controller may serve the requested LOCRATE; however it can also offer slots according to a lower LOCRATE, e.g., to better manage the current network load.

The parent controller adds a XGTSOff IE (GTS Offer) to one of the next RCMs (or similar message XOCM in OoB communications) to propose its offer to the requesting device. In particular, the XGTSOff IE includes a Slot Allocations field containing a list of slot allocations, each made of an optional Block Index, a Round Index, a Slot Index and a Block or Round Period to accurately identify the reserved slot. Basically, the Slot Index field specifies the index of the allocated slot in the concerned RSP GTSW of a Round Index.

The requesting device decides if it accepts the offer or declines it, and replies with a message including a XGTSResp IE (GTS Response), which IE identifies the allocation offer and gives the requesting device's decision (either Accepted or Declined). The message is sent in the next allocated slot, in the next OoB CAP or in the next RSP LTW. In case of acceptation, the proposed slots are reserved to the requested device in the next ranging round(s) of next ranging block(s).

On the other hand, the LTW Ranging Round allows tracked devices to be loosely synchronized. The response phase LTW is organized as a Contention Access Period (CAP), where the loosely synchronized tracked devices contends to access a slot, using Clear Channel Assessment (CCA) to avoid collision.

Multiple combinations ("Ranging Block configuration") of ordered Ranging round types within a Ranging Block can be defined. Exemplary Ranging Block configurations include (for an exemplary Ranging Block of eight Ranging Rounds):
7 x GTSW | 1x LTW,
1 x GTSW | 7x LTW,
GTSW | LTW | GTSW | LTW | GTSW | LTW | GTSW | LTW,
8 x LTW.

Depending on the measurement method used, the devices successively send ranging messages in the slots of the RP. Exemplary measurement methods include Uplink Time Difference of Arrival (UL-TDoA), Downlink Time Difference of Arrival (DL-TDoA), Reconstructed Time of Flight (RToF), Timestamped Time of Flight (TsToF) - aka multiple Two-Way Ranging.

Devices known as "initiators" for the ranging send the first messages during the INIT sub-phase, while the "Responders" reply in the subsequent slots during the RSP sub-phase. The ranging measurements are based on the messages exchanged.

A further, however optional, phase, namely the Measurement Report Phase or MRP, may follow the RP up to the end of the ranging round, in particular to report ranging measurements.

In embodiments, the xRCP is made of 16 slots, the INIT sub-phase of 32 slots and the RSP sub-phase of 102 slots.

Synchronization in the Omlox system may be achieved by the RCM messages in the IB, which time-organize the ranging rounds. In this perspective, each RCM carries its slot index, allowing the Omlox devices to count the slots. Additional synchronization can be offered by the equivalent XOCM messages in the OoB. A timing relation between IB ranging rounds and OoB superframes (hence OoB and IB are synchronized) is introduced so that each XOCM message is sent by the concerned controller at an appropriate time.

Each Omlox device knows the slot indexes of its allocated slots in the RSP GTSW, counts (from the RCMs) for these slots to arrive and then transmits their ranging messages in the allocated slots. In addition, they can use contention-based slots in the RSP LTW.

The devices of both systems SYS1, SYS2 compete one with each other to access the shared UWB channel, usually using contention based or contention free CA (Channel Access) schemes.

Improved cooperating or coexistence of the two systems relying on different protocols is sought to enhance UWB efficiency.

As shown in **Figure 2****,** one or both of the first-protocol device (here FiRa device) and second-protocol device (here Omlox device) are enhanced with additional limited UWB capabilities to initiate discussion with the other system.

The apparatus 200 depicted in Figure 2 includes a FiRa device 200a. Similar adaptations could apply for an Omlox device to cooperate with the FiRa system.

The FiRa device 200a includes a conventional FiRa IB unit 210 compliant with the IB operations (FiRa IB protocol) described above and in the FiRa document and a conventional FiRa OoB connector 220, typically a BLE connector compliant with the OoB FiRa operations (FiRa OoB protocol) described above.

The FiRa IB unit 210 operates on the UWB channel.

The FiRa device 200 also includes a coexistence unit 230 and a coexistence connector 240. The coexistence unit 230 controls the coexistence connector 240 and the FiRa IB unit 210 to allow smooth coexistence between the two systems SYS1 and SYS2.

The coexistence connector 240 aims to provide compatibility with the OoB of the other system, here with the OoB Omlox connector. This is for the FiRa device 200 to be able to detect and join the Omlox network for cooperation or coexistence operations.

The coexistence connector 240 may be a connector additional to the OoB Fira connector 220, e.g. a connector implementing the 802.15.4 standard as Omlox does.

In variants, the connector 240 may be implemented by the OoB FiRa connector 220 to which additional capabilities have been provided, as apparent from the description below. This may be the case when both the FiRa and Omlox systems rely on a BLE OoB.

The capabilities of the coexistence connector 240 include part of the Omlox OoB protocol to provide the ability for the FiRa device 200a to discover and join the Omlox system. This includes ability to decode and handle the XODM, XJR and XJC messages, to request slot allocations by decoding and handling XGTSReq, XGTSOff and XGTSResp IEs and messages comprising thereof (e.g. XOCM message for the XGTSOff IE). In some embodiments, there is no need for the FiRa device 200a to know more about the Omlox OoB protocol.

The coexistence unit 230 comprises a scheduling information unit 231, an IB configuration unit 232 and a coexistence timing unit 233.

The scheduling information unit 231 is configured to obtain (Omlox) scheduling information from a (Omlox) second-protocol device of SYS2, wherein the scheduling information defines transmission slots reserved to the first-protocol device. To do so, the coexistence unit 230 preferably works together with the coexistence connector 240 to obtain the scheduling information using out-of-band (OoB) communication.

As apparent from below, this cooperation may conduct the apparatus 200 to request a Guaranteed Time Slot (GTS) allocation to SYS2.

The configuring unit 232 is designed to configure the (FiRa) first-protocol device to receive and decode the (Omlox) second-protocol synchronization frames, namely the RCM messages. To do so, the configuring unit 232 configures the FiRa IB unit 210, e.g. by enabling an (Omlox) second-protocol subunit 211. The subunit 211 provides additional capabilities to the FiRa IB unit 210, in particular part of the Omlox IB protocol to provide the ability for the FiRa device 200a to synchronize to the Omlox system SYS2 and to accurately find the transmission slots it can use. This includes the ability to decode and handle the RCM messages. In some embodiments, there is no need for the FiRa device 200a to know more about the Omlox IB protocol.

Thanks to the received and decoded RCM, the coexistence timing unit 233 is able to locate in time the transmission slots to be used (e.g. reserved GTS slots) and then to manage FiRa communications within the transmission slots for SYS1.

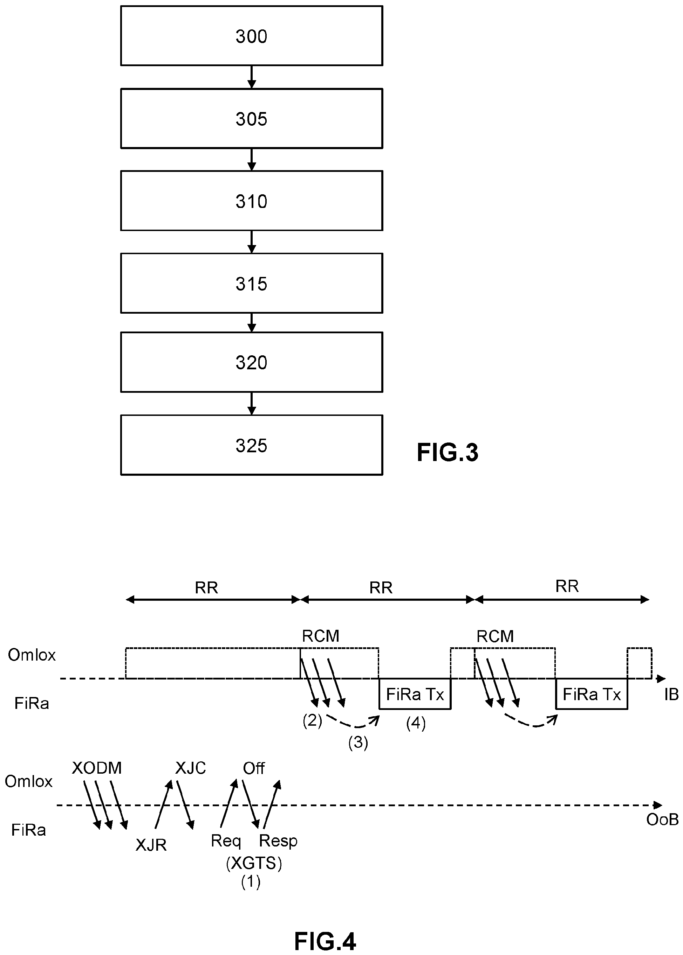

**Figure 3** illustrates, using a flowchart, steps for a coexistence between two communication systems sharing the same wireless medium with different protocols, according to embodiments. The flowchart is described in relation to the systems of **Figure 1** for illustrative purposes only, i.e., for coexistence between FiRa and Omlox. References are also made to **Figure 4****,** which depicts a timeline of message exchanges, to further illustrate the steps.

Step 300 consists for a device willing to organize coexistence to discover a competing system. In the proposed example, FiRa device F1 discovers Omlox SYS2 by sensing XODM messages periodically sent by the Omlox controllers S1-S3, using its Coexistence connector 240 (in the OoB). The XODMs are the first messages in **Figure 4****.**

Knowing the basic configuration of Omlox SYS2, the FiRa device F1 can decide to join the Omlox system by sending an XJR request to a selected Omlox satellite S1-S3, using the OoB. Association to the Omlox system is validated upon receiving the XJC confirmation. This is step 305.

Next, at step 310, the FiRa device F1 obtains Omlox scheduling information from the selected Omlox satellite. The scheduling information defines transmission slots that the FiRa system SYS1 can use. In particular, those transmission slots are reserved to the first-protocol device.

The reserved slots may be predefined.

In embodiments, step 310 is performed using OoB, to request a Guaranteed Time Slot (GTS) allocation to SYS2, in particular through the selected Omlox satellite.

Hence, the FiRa device F1 (in particular the scheduling information unit 231) uses its Coexistence connector 240 to send a message having a XGTSReq IE. The XGTSReq IE specifies an amount of slots SYS1 needed, using the LOCRATE field. The FiRa device F1 also indicates to SYS2 that it is a device from another (not Omlox) system, e.g. by setting the Ranging Type field (usually used to set to the type of ranging that will be used) in the XGTSReq IE to 2.

Next, the FiRa device F1 receives a response, GTS offer (XOCM in the OoB) including an XGTSOff IE providing a list of proposed slot allocations. In embodiments, SYS2 may propose to the FiRa device F1 (hence to SYS1) a maximum number of 102 slots (the size of the RSP phase) per Ranging Round. In embodiments, the allocation proposal is made per Ranging Block, meaning a different number of slots may be proposed throughout the Ranging Rounds with a Ranging Block.

In embodiments, the proposed slots are all in one or more RSP GTSWs. In other embodiments, the proposed slots are all in one or more RSP LTWs. In yet other embodiments, the proposed slots are shared between RSP GTSWs and RSP LTWs.

The FiRa device F1 replies with a message including the XGTSResp IE in case of acceptation.

The GTS exchange is depicted by reference (1) in **Figure 4****.**

At the end of step 310, the FiRa device F1 (the coexistence unit 230) knows its reserved transmission slots.

The configuring unit 232 next configures the FiRa IB unit 210 to receive and decode the Omlox second-protocol synchronization frames, i.e., the RCMs. This is step 315. The configuring unit 232 may merely enable or activate the Omlox subunit 211. From that instant, the FiRa device F1 is able to receive and decode the RCMs sent by the Omlox satellites S1-S3. This is depicted by reference (2) in **Figure 4****.**

The FiRa device F1 is now ready to perform coexistence communications, i.e., to shape its FiRa communication timeline for coexistence with the Omlox communications.

To do so, the coexistence timing unit 233 identifies the slot indexes of the received RCMs and, knowing the indexes of the reserved transmission slots, counts for the slots from the received RCM or RCMs, up to when come the reserved transmission slots. The counting and waiting phase is depicted by reference (3) in **Figure 4****.**

In other words, the FiRa device F1 locates in time the reserved transmission slots based on the received RCMs and waits for them. This is step 320.

Next, the FiRa device F1 manages FiRa communications within the reserved transmission slots. This is step 325 depicted by reference (4) in **Figure 4****.**

Preferably, the FiRa device F1 operates as a FiRa controller, meaning it uses the first reserved transmission slot to transmit the FiRa Control Message, and let the following reserved transmission slots for the ranging exchange. The FiRa device F1 may then act as the Initiator of the ranging exchange or as the Responder.

As shown in **Figure 4****,** multiple opportunities to perform FiRa communications in successive Omlox Ranging Rounds can be provided over time. Each time, the reserved transmission slots are located in time based on the RCMs received for the concerned Ranging Round.

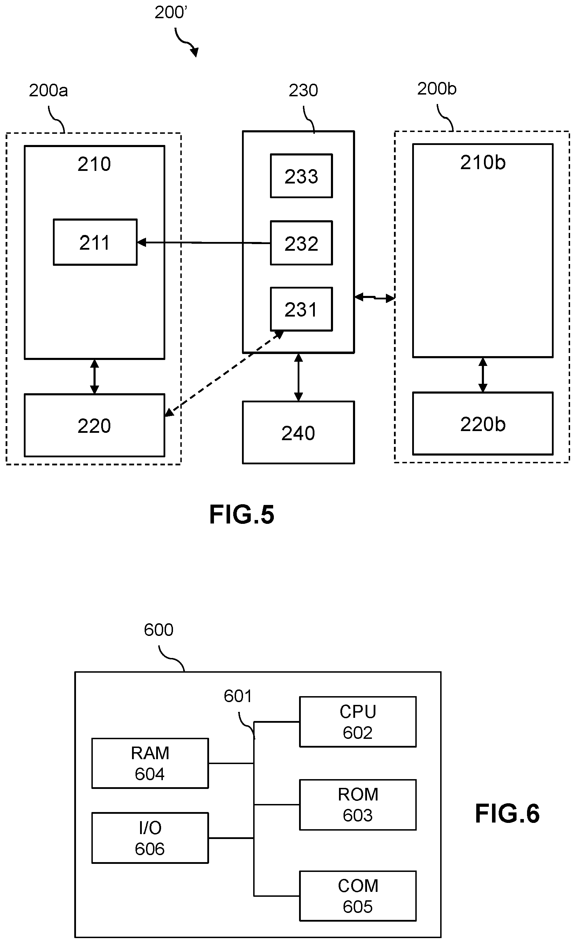

**Figure** 5 illustrates an apparatus according to some embodiments. The same references as in **Figure** 2 represent the same units.

Apparatus 200' of **Figure** 5 is a dual apparatus in that it includes, within the same unit or common housing, the first-protocol device and the second-protocol device, i.e., a FiRa device 200a and an Omlox device 200b in the above example.

In that way, an Omlox satellite may embed a FiRa device to extend its capabilities. In the same way, a FiRa device may embed Omlox capabilities to participate to an Omlox network, in particular as an Omlox satellite.

The Omlox device 200b includes an Omlox IB unit 210b compliant with IB operations (Omlox IB protocol) described above and an Omlox OoB connector 220b, typically an 802.15.4 connector compliant with the OoB Omlox operations (Omlox OoB protocol) described above.

In these embodiments, the devices no longer have to discover one each other. The scheduling information may be handled internally, i.e., by exchanging information using internal buses within the dual apparatus 200'. Namely, the GTS messages (comprising XGTSReq, XGTSOff and XGTSResp IEs) can be exchanged internally through the coexistence unit 230.

The multiple scenarios described above seek to provide coexistence between a FiRa system and an Omlox system. A FiRa device obtains scheduling information from an Omlox satellite, which information defines transmission slots reserved for the FiRa system. The slots may be allocated upon GTS request by the FiRa device over the OoB. The FiRa device configures its FiRa IB unit to receive and decode the Omlox synchronization frames, i.e., RCMs. It counts the slots from the RCMs to locate in time the transmission slots reserved for the FiRa system. Upon reaching those reserved slots, the FiRa device starts managing FiRa communications within the slots. The FiRa device, as FiRa Controller, may send a Control Message to prepare a ranging exchange.

Although the scenarios mentioned above mostly concentrates on two UWB (IEEE 802.15.4z) protocols or systems, namely the FiRa protocol/system and the Omlox protocol/system, other protocols or systems can be used. As an illustrative example, the teachings of the present disclosure may apply to a WiFi (RTM, implementing the IEEE 802.11 standards) system in which an access point of a Basic Service Set OoB-discovers the Omlox network, obtains reserved transmission slots, advertises (reserved) Target Wake Time (TWT) periods matching the reserved transmission slots to its associated stations, in order to allow WiFi communications during the reserved transmission slots.

**Figure** 6 illustrates a hardware architecture for any device or apparatus described above, in particular any device of **Figure 1****.**

Device 600 comprises an internal communication bus 601 to which are preferably connected:
- one or more central processing units 602, such as one or more CPU processors or microprocessors;
- a storage memory 603 - typically ROM and/or hard disk and/or flash memory - for storing computer programs intended to implement all or some of the operations described above;
- a random access memory (RAM) 604, for storing the executable code of the computer programs as well as the registers adapted to record the variables and parameters necessary for their execution;
- one or more communication interfaces 605 connected to a communication network, e.g. an UWB network such as a FiRa network or an Omlox network; and
- one or more I/O 906 inputs/outputs enabling a user or administrator to interact with the computer programs, both in configuration and in operation. Typically, the inputs/outputs may include a screen serving as a graphical interface with the user and/or a keyboard or any other pointing means enabling the user to interact.

The executable code stored in memory 603 may be received by means of the communication network, via interface 605, to be stored therein prior to execution. Alternatively, the executable code is not stored in non-volatile memory 603 but can be loaded into volatile memory 604 from a remote server via the communication network for direct execution.

The central processing unit 602 is preferably adapted to control and direct the execution of the instructions or parts of the software code of the computer program(s). On power-up, the program or programs that are stored in non-volatile memory 603 or on the remote server are transferred/loaded into random access memory 604, which then contains the executable code of the program or programs, as well as registers for storing variables and parameters necessary for implementing the methods.

## Claims

1. A communication method comprising, at a first-protocol device (F1, F2) of a first-protocol system (SYS1) operating on a wireless medium using a first protocol:
obtaining (310) scheduling information from a second-protocol device (S1-S3) of a second-protocol system (SYS2) operating on the wireless medium using a second and different protocol and fixed transmission slots in a frame structure synchronized with second-protocol synchronization frames, wherein the scheduling information defines transmission slots reserved to the first-protocol device,
configuring (315) the first-protocol device to receive and decode the second-protocol synchronization frames (RCM),
managing (325) first-protocol communications in the first-protocol system within the reserved transmission slots, using the second-protocol synchronization frames to locate in time the reserved transmission slots.

2. The communication method of Claim 1, wherein the wireless medium is an Ultra-Wide Band medium.

3. The communication method of Claim 1 or 2, wherein the first-protocol device (F1, F2) is a FiRa controller.

4. The communication method of any one of Claims 1 to 3, wherein the second-protocol device (S1-S3) is an Omlox satellite.

5. The communication method of any one of Claims 1 to 4, wherein the transmission slots reserved to the first-protocol device are included in a contention access period of the frame structure.

6. The communication method of any one of Claims 1 to 5, wherein obtaining the scheduling information includes out-of-band (OoB) exchanging with the second-protocol device.

7. The communication method of Claim 6, wherein obtaining the scheduling information includes requesting a Guaranteed Time Slot (GTS) allocation to the second-protocol device.

8. The communication method of Claim 7, wherein requesting a Guaranteed Time Slot (GTS) allocation includes sending a message having a XGTSReq information element (IE), the XGTSReq IE including a Ranging Type field set to 2.

9. The communication method of any one of Claims 1 to 8, wherein the first-protocol device and the second-protocol device belongs to one and the same dual apparatus (200'), wherein the obtaining of the scheduling information includes information transmission using internal buses within the dual apparatus.

10. A communication apparatus (200, 200') comprising:
a first-protocol device (F1, F2, 200a) of a first-protocol system (SYS1) operating on a wireless medium using a first protocol:
a scheduling information unit (231) to obtain scheduling information from a second-protocol device (S1-S3) of a second-protocol system (SYS2) operating on the wireless medium using a second and different protocol and fixed transmission slots in a frame structure synchronized with second-protocol synchronization frames, wherein the scheduling information defines transmission slots reserved to the first-protocol device,
a configuring unit (232) to configure the first-protocol device (F1, F2, 200a) to receive and decode the second-protocol synchronization frames (RCM),
wherein the first-protocol device is configured to manage first-protocol communications in the first-protocol system within the reserved transmission slots, using the second-protocol synchronization frames to locate in time the reserved transmission slots.

11. The communication apparatus of Claim 10, wherein the first-protocol device is a FiRa controller and the second-protocol device is an Omlox satellite.

12. The communication apparatus of Claim 10 or 11, wherein the scheduling information unit (231) is configured to obtain the scheduling information using out-of-band (OoB) communication with the second-protocol device.

13. The communication apparatus of Claim 12, wherein the scheduling information unit (231) is configured to request a Guaranteed Time Slot (GTS) allocation to the second-protocol device, by sending a message having a XGTSReq information element (IE), the XGTSReq IE including a Ranging Type field set to 2.

14. The communication apparatus (200') of any one of Claims 10 to 13, including the second-protocol device (200b).
